# EUROPÄISCHE PATENTSCHRIFT

(11) **EP 3 394 869 B1**
(45) Veröffentlichungstag und Bekanntmachung des Hinweises auf die Patenterteilung: **24.07.2024**
(21) Anmeldenummer: 16798692.6
(22) Anmeldetag: 17.11.2016
(51) Int. Cl.: H01G 11/26, H01G 11/70

(54) **KONDENSATOR MIT BESCHICHTETEN POREN**
CAPACITOR WITH COATED PORES
CONDENSATEUR À PORES ENDUITS

(30) Priorität: 23.12.2015 DE 102015122773
(43) Veröffentlichungstag der Anmeldung: 31.10.2018
(73) Patentinhaber: Deutsches Zentrum für Luft- und Raumfahrt e.V., 51147 Köln (DE)
(72) Erfinder: GEIER, Sebastian, 38114 Braunschweig (DE); MAHRHOLZ, Thorsten, 38228 Salzgitter (DE)
(74) Vertreter: REHBERG HÜPPE + PARTNER
(86) Internationale Anmeldenummer: PCT/EP2016/077968
(87) Internationale Veröffentlichungsnummer: WO 2017/108285

(56) Entgegenhaltungen:
- US-A1- 2007 134 549
- US-A1- 2009 291 368
- US-A1- 2011 164 349
- US-A1- 2013 266 856

## Beschreibung

### TECHNISCHES GEBIET DER ERFINDUNG

Die Erfindung betrifft ein Konstruktions- und/oder Isolationselement mit einer Schaumstruktur, die Teil eines Kondensators mit einem Schichtaufbau ist, insbesondere ein Konstruktionsund/oder Isolationselement mit einem Superkondensator mit einem solchen Schichtaufbau. Des Weiteren betrifft die Erfindung ein Verfahren zur Herstellung eines solchen Konstruktionsund/oder Isolationselements.

### STAND DER TECHNIK

Die deutsche Patentanmeldung DE 10 2009 030 558 A1 offenbart einen stark porösen, schwammartigen Trägerkörper aus einem Metall oder einer metallhaltigen Legierung, der durch Tauchen in ein aktives Material an seinen durch die poröse Struktur gebildeten Poren mit dem aktiven Material beschichtet wird. Der mit dem aktiven Material beschichtete Trägerkörper bildet eine Elektrode einer Batterie. Das aktive Material ist insofern aktiv, als dass es beim Laden und Entladen der Batterie chemisch reaktiv ist. Mehrere derartige Elektroden werden zur Ausbildung der Batterie in einen Elektrolyten eingetaucht und in dem Elektrolyten durch Separatoren voneinander getrennt.

Die deutsche Patentanmeldung DE 10 2004 022 110 A1 offenbart einen Kondensator mit einem porösen Grundkörper, der mit einem Dielektrikum überzogen wird. Das Dielektrikum wird wiederum mit einem Festkörperelektrolyten überzogen, der seinerseits mit einer Gegenelektrodenlage überzogen wird. Das Dielektrikum und der Elektrolyt dringen dabei in die Poren des Grundkörpers ein, während leitfähige Schichten, die die Gegenelektrodenlage bilden, nicht oder nur eingeschränkt in die Poren eindringen.

Die britische Patentanmeldung GB 1044444 offenbart einen Kondensator, bei dem ein poröser elektrisch leitender Grundkörper mit einem Dielektrikum überzogen wird, das in die Poren des Grundkörpers eindringt, und bei dem das Dielektrikum wiederum mit einem elektrisch leitenden Festkörpermaterial überzogen wird.

Die japanische Patentanmeldung JP 2011-192688 A offenbart eine poröse Elektrode, die mit einem Dielektrikum überzogen ist, das wiederum mit einer leitfähigen Polymerschicht überzogen ist. Dabei dringen das Dielektrikum und die leitfähige Polymerschicht jeweils in die Poren der Elektrode ein.

Die internationale Patentanmeldung WO 03/012908 A2 offenbart einen Kondensator, der ein poröses oder schwammförmiges, d. h. offenporiges Grundelement aufweist. Das offenporige Grundelement wird mit einer dünnen Schicht eines Elektrolyten überzogen. Anschließend wird eine Gegenelektrode in flüssiger Form in die Poren des Grundelements eingebracht. Die Gegenelektrode füllt die Poren des Grundelements vollständig aus, so dass Elektrode und Gegenelektrode fingerartig ineinandergreifen. Ein Mittelwert der Schichtdicke des Elektrolyten ist kleiner als 10³ nm. Ein kleinster Abstand zwischen Elektrode und Gegenelektrode beträgt 500 nm bis 5.000 nm.

Die deutsche Veröffentlichung einer internationalen Patentanmeldung DE 11 2007 000 434 T5 offenbart eine elektrochemische Zelle, für die als Beispiel eine Festoxidbrennstoffzelle genannt ist. Die elektrochemische Zelle weist ein schaumförmiges Grundelement auf, das mehrere Durchgangslöcher aufweist. Die Durchgangslöcher sind dabei nicht identisch mit den Schaumporen des schaumförmigen Grundelements. Jedes der Durchgangslöcher wird an seiner Innenseite ggf. mit einer ersten Elektrodenschicht (wenn der poröse Träger selbst nicht leitfähig ist) und in jedem Fall mit einer Elektrolytschicht und einer Gegenelektrodenschicht beschichtet. Es kann also entweder das Grundelement elektrisch leitend sein, oder zwischen dem Grundelement und dem Elektrolyten kann eine elektrisch leitende Elektrodenschicht aufgetragen sein. Die Durchgangslöcher haben Durchmesser von 4 · 10⁵ nm bis 8 · 10⁵ nm, die Elektrolytschicht eine Dicke von 1 · 10⁴ nm bis 1,5 · 10⁴ nm.

Die US-Patentanmeldung US 2013/0266856 A1 offenbart einen Superkondensator, in dem eine Elektrode durch eine offene zusammenhängende Wandstruktur mit Poren gebildet ist, wobei die Poren optional, aber nicht notwendigerweise, untereinander verbunden sind. Für die Poren ist insbesondere ein Durchmesser zwischen 2 nm und 50 nm offenbart; wobei auch Durchmesser von weniger als 2 nm und mehr als 50 nm beschrieben sind. Innerhalb der Poren ist auf die Elektrode ein Elektrolyt und ein Material für eine zweite Elektrode aufgetragen. Dabei können mit dem zweiten Elektrodenmaterial die Poren gefüllt sein oder teilweise ungefüllt bleiben. Die Elektrode kann auch gebildet werden, indem ein Naturschwamm oder Kunstschwamm mit dem Elektrodenmaterial beschichtet wird. Das Auftragen einer solchen Elektrodenschicht kann mit CVD erfolgen. Das mit dem Elektrodenmaterial beschichtete Material, beispielsweise der Naturoder Kunstschwamm, kann entfernt werden, sodass nur das Elektrodenmaterial als Wandstruktur zurückbleibt. Diese Wandstruktur kann einem ätzenden Bad ausgesetzt werden, bis einzelne Wände zwischen Poren entfernt sind, sodass mehr Poren zur aktiven Oberfläche der Wandstruktur beitragen.

Die US-Patentanmeldung US 2009/0291368 A1 offenbart eine Batterie mit einer Anode, die eine Basis aus Kohlenstoffschaum oder einem anderen leitfähigen Schaummaterial mit Poren aufweist. Das Schaummaterial kann beschichtet sein. Darauf aufgetragen sind eine Separatorschicht und eine Kathodenschicht. Die Batterie ist flexibel, kann aber Lasten aufnehmen und eignet sich als Strukturkomponente eines Geräts, in dem sie eingesetzt ist. Für die Poren sind Größen von 1 µm bis 5000 µm offenbart. Für die Separatorschicht, in der der Separator optional einen Elektrolyten aufweisen kann, sind Schichtdicken von 20 nm und 200 nm offenbart. Das Kathodenmaterial kann ein Material aufweisen, das zu Nanopartikeln geformt werden kann. Die Nanopartikel werden zu der Kathodenschicht verbunden. Die Schichten werden mittels elektrophoretischer Abscheidung aufgetragen.

Die US-Patentanmeldung US 2011/0164349 A1 offenbart einen Kondensator, der als Strukturbauteil eingesetzt wird. Der Kondensator kann eine von einer Anzahl von verschiedenen Strukturen aufweisen, unter anderem eine Bienenwabenstruktur. Der Kondensator kann zusätzlich beschichtet oder gekapselt oder in anderer Weise durch ein geeignetes Material geschützt sein.

### AUFGABE DER ERFINDUNG

Der Erfindung liegt die Aufgabe zugrunde, ein Konstruktions- und/oder Isolationselement mit einem Kondensator besonders hoher Energiedichte und mit gleichzeitig besonders hohem Leichtbaupotential bereitzustellen.

### LÖSUNG

Die Aufgabe der Erfindung wird erfindungsgemäß mit den Merkmalen der unabhängigen Patentansprüche gelöst. Bevorzugte Ausgestaltungen sind den abhängigen Patentansprüchen zu entnehmen.

### BESCHREIBUNG DER ERFINDUNG

Die Erfindung umfasst einen Kondensator mit einem Schichtaufbau auf einem Grundelement mit Poreninnenoberflächen aufweisenden offenen Poren. Dabei ist das Grundelement schaumförmig, so dass es eine große Anzahl an offenen Poren aufweist. Das Grundelement ist zumindest im Bereich eines Teils der Poreninnenoberflächen elektrisch leitfähig und bildet damit eine zusammenhängende Elektrode aus. Auf der Elektrode ist eine Schicht eines Festkörperelektrolyten angeordnet. Als Elektrolyt eignen sich beispielsweise Nafion oder Hylon, aber auch Polymermatrizen mit eingelagerten organisch geladenen Molekülen einer ionischen Flüssigkeit oder modifizierter Harze sowie Lithium-Phosphor-Oxinitrid (LiPON) oder andere Lithium-Verbindungen wie Li₂S-P₂S₅, Li₁₄Zn(GeO₄)₄ oder Li_{1.3}Al_{0.3}Ti_{1.7}(PO₄)₃ (NASICON). Der Festkörperelektrolyt ist dabei direkt auf der Elektrode angeordnet.

Wiederum direkt auf dem Festkörperelektrolyten ist eine elektrisch leitfähige Schicht angeordnet, die eine Gegenelektrode ausbildet. Die Gegenelektrode kann aus einem Metall oder einem elektrisch leitfähigen Polymer gebildet sein. Der sonst bei Kondensatoren übliche Separator entfällt. Die Gegenelektrode ist als dünne Schicht aufgebracht, so dass innerhalb der offenen Poren ein zusammenhängender Freiraum verbleibt. Der zusammenhängende Freiraum erstreckt sich dabei über mehr als eine Pore, bevorzugt aber über alle oder im Wesentlichen alle Poren des Grundelements. Die schaumartige Struktur des Grundelements bleibt daher ggf. erhalten. Dies trägt insbesondere zur hohen Leichtbaugüte des Kondensators und zur Erhaltung der Eigenschaften der Schaumstruktur wie etwa der thermischen Isolierwirkung bei.

Bei dem Kondensator werden die Flächen der Elektrode und der Gegenelektrode durch die Schaumstruktur bestimmt. Da bei einem Schaum die Oberfläche im Vergleich zu seiner Masse besonders groß ist, kann auf der Grundlage eines Schaums ein besonders leichter Kondensator mit einer sehr großen Elektrodenoberfläche und einer sehr großen Gegenelektrodenoberfläche geschaffen werden. Die Kapazität eines Kondensators ist direkt abhängig von der Elektrodenoberfläche und der Gegenelektrodenoberfläche. Dies kann wie folgt verdeutlicht werden: Für einen Plattenkondensator folgt die Kapazität *C* der Formel *C* = *ε*₀ *εᵣ A*/*d* (mit der elektrischen Feldkonstante des Vakuums *ε*₀, der relativen Permittivität *ε*ᵣ des Elektrolyten, dem Abstand *d* von Elektrode und Gegenelektrode und der Oberfläche *A* der Elektrode bzw. der Gegenelektrode). Bei gegebenen Elektrolyten sind *ε₀* und *ε*ᵣ Konstanten. Daher kann die Kapazität nur erhöht werden, indem der Abstand möglichst klein und die Oberfläche möglichst groß gewählt wird. Ein Kondensator auf Basis einer Schaumstruktur hat also schon allein wegen seiner sehr großen Elektrodenoberfläche eine besonders hohe Kapazität.

Zudem ist dadurch, dass der Festkörperelektrolyt und die Gegenelektrode als dünne Schichten direkt auf die Elektrode aufgebracht werden, der Abstand zwischen der Elektrode und der Gegenelektrode sehr klein. Dies wirkt sich nicht nur positiv auf die Kapazität aus, sondern damit werden auch die Diffusionswege für Ionen, die zwischen der Elektrode und der Gegenelektrode migrieren, kurz. Die Folge sind kurze Reaktionszeiten. Somit ergibt sich ein Kondensator mit kurzen Reaktionszeiten, einer hohen Kapazität und einer relativ dazu geringen Gesamtmasse, d. h. einem hohen Leichtbaupotential, gegenüber den aus dem Stand der Technik bekannten Kondensatoren. Unterstützt wird dieser Effekt dadurch, dass der bei Kondensatoren sonst übliche Separator entfällt und somit eine Dicke und eine Masse einer zusätzlichen Separatorschicht eingespart werden. Der Kondensator ist damit insbesondere für den Einsatz mit hohen Anforderungen an Leichtbauqualitäten, beispielsweise an Luft- und Raumfahrzeugen, aber auch anderen Fahrzeugen, geeignet. Darüber hinaus ist der Kondensator besonders klein und kompakt. Er eignet sich daher für den Einsatz in Objekten, die beispielsweise häufig von Menschen getragen werden, wie etwa Mobiltelefone und Laptop-Computer, oder anderen Objekten, die besonders leicht und/oder kompakt sein sollen.

Der elektrisch leitfähige Teil der Poreninnenoberfläche ist nanostrukturiert. Dazu können elektrisch leitfähige hierarchische Substrukturen auf die Poreninnenoberfläche aufgebracht werden. Als solche eignen sich beispielsweise Kohlenstoffnanoröhren, Graphene oder metallische Partikel. "Nanostrukturiert" bedeutet Abmessungen der hierarchischen Substrukturen im Bereich von einigen bis einigen hundert Nanometern. Dabei kann die Nanostrukturierung in den Poreninnenoberflächen inhärent sein oder zusätzlich aufgebracht sein, beispielsweise durch chemische Gasphasenabscheidungen (chemical vapour deposition, CVD). Durch eine Nanostrukturierung wird die Oberfläche der Poreninnenoberflächen gegenüber einer reinen Schaumstruktur noch einmal erhöht. Da wie oben gezeigt die Kapazität des Kondensators direkt von der Elektrodenoberfläche und der Gegenelektrodenoberfläche abhängt, ist dies besonders vorteilhaft für das Erreichen einer hohen Kapazität.

In analoger Weise zu der Poreninnenoberfläche (und somit der Elektrodenoberfläche) kann auch die Gegenelektrodenoberfläche nanostrukturiert oder auch mikrostrukturiert sein, um die genannten Vorteile zu erzielen. "Mikrostrukturiert" bedeutet Abmessungen der hierarchischen Substrukturen im Bereich von einigen bis einigen hundert Mikrometern. Dabei können zum einen sowohl die Poreninnenoberfläche als auch die Gegenelektrodenoberfläche oder nur die Poreninnenoberfläche oder nur die Gegenelektrodenoberfläche nanostrukturiert oder ggf. mikrostrukturiert sein.

Die Elektrode kann an dem Grundelement auf zwei grundsätzlich verschiedene Weisen ausgebildet sein: Erstens kann das Grundelement eine nicht elektrisch leitfähige Schaumstruktur und eine elektrisch leitfähige Schicht im Bereich des elektrisch leitfähigen Teils der Poreninnenoberflächen aufweisen. Die elektrisch leitfähige Schicht kann dabei die Poreninnenoberflächen ganz oder teilweise überziehen. Vorzugsweise überzieht die leitfähige Schicht die Poreninnenoberflächen zu einem weit überwiegenden Teil und bildet dabei eine möglichst zusammenhängende elektrisch leitfähige Schicht aus. Nur zusammenhänge Teile der elektrisch leitfähigen Schicht bilden die Elektrode aus.

Die elektrisch leitfähige Schicht kann aus einem beliebigen geeigneten elektrisch leitfähigen Material, insbesondere einem Metall oder einem elektrisch leitfähigen Polymer, gebildet werden. Dabei kann die leitfähige Schicht aus dem gleichen Material gebildet sein wie die Gegenelektrode. Es ist aber durchaus möglich, dass die leitfähige Schicht aus einem anderen Material gebildet ist als die Gegenelektrode.

Die nicht leitfähige Schaumstruktur kann beispielsweise aus einem anorganischen Schaum (z.B. einem Aerogel) oder einem organischen Schaum, wie einem thermoplastischen Schaum (z. B. expandiertem Polystyrol, expandiertem Polypropylen oder expandiertem Polyvinylchlorid), einem elastomeren Schaum (z. B. Polyurethan-Weichschaum oder Nitrilkautschuk-Schaum [Nitril-Butadien-Kautschuk; NBR]) oder einem duroplastischen Schaum (z. B. Polyurethan-Hartschaum oder Phenoplast-Schaum bzw. Phenolharzschaum), gebildet sein. Möglich ist aber jedes Material, das eine feste Schaumstruktur ausbilden kann.

Die Schichtdicke der elektrisch leitfähigen Schicht im Bereich des elektrisch leitfähigen Teils der Poreninnenoberflächen kann 1 bis 1000 nm betragen. Möglich sind auch Schichtdicken von 5 bis 70 nm, von 10 bis 70 nm, von 30 bis 50 nm, von 50 bis 100 nm, von 100 bis 500 nm, von 100 bis 1000 nm, von 200 bis 800 nm oder von 250 bis 800 nm. Vorteilhafterweise beträgt die Schichtdicke der leitfähigen Schicht jedoch 10 bis 50 nm, 20 bis 40 nm oder 25 bis 35 nm oder 300 bis 500 nm, 350 bis 450 nm oder 375 bis 425 nm. Besonders dünne Schichten mit den genannten Schichtdicken im Nanometer-Bereich sind deswegen vorteilhaft, weil sie ein Minimum an Masse zu der Gesamtmasse des Kondensators beitragen und damit einer hohen Leichtbaugüte zuträglich sind und weil sie, vor allem bei Edelmetallelektroden, eine kostengünstige Herstellung ermöglichen. Solche geringen Schichtdicken sind auch deswegen vorteilhaft, weil die Poren des Grundelements desto weniger mit der Elektrode, dem Festkörperelektrolyten und der Gegenelektrode gefüllt werden, je dünner diese Schichten sind. Wenn die genannten Schichten insbesondere so dünn sind, dass sie die Poren nicht auffüllen, bleiben Eigenschaften der Schaumstruktur wie beispielsweise eine thermische Isolierwirkung auch für den Kondensator erhalten. Eine bereits sehr geringe Schichtdicke der elektrisch leitfähigen Schicht als dem Grundelement nächstliegende und damit grundlegende der genannten drei Schichten trägt damit dazu bei, eine solche geringe Gesamtdicke aller drei genannten Schichten zu erreichen.

Zweitens kann das Grundelement selbst eine elektrisch leitfähige Schaumstruktur aufweisen. Als Material für eine solche elektrisch leitfähige Schaumstruktur eignen sich beispielsweise offenporige Metallschäume (beispielsweise Aluminium, Kupfer, Magnesium, Nickel), kohlenstoffbasierte Schäume (beispielsweise Kohlenstoffschäume, Aktivkohle, Graphite, Glaskohlenstoff) sowie polymere Schäume auf Basis von Duromeren und Thermoplasten, die mit elektrisch leitfähigen Additiven versehen sind (beispielsweise Mikro- oder nanoskalige Ruße, Kohlenstoffröhren, Aerographite, Fullerene, Pechfasern, Graphene, metallische Partikel), oder keramische Trägermaterialien, soweit diese eine ausreichende elektrische Leitfähigkeit aufweisen. Eine solche elektrisch leitfähige Schaumstruktur weist direkt leitfähige Poreninnenoberflächen auf, und muss daher zur Ausbildung der Elektrode nicht zusätzlich beschichtet werden. Dies ist besonders vorteilhaft, weil es sowohl zu einer geringen Gesamtdicke der genannten Schichten in den Poreninnenoberflächen beiträgt, da eine der drei genannten Schichten entfallen kann, als auch deswegen die Leichtbaugüte des Kondensators noch einmal erhöht wird.

Die leitfähige oder nicht leitfähige Schaumstruktur kann durch ein Aufschäumen gebildet sein, beispielsweise ein treibmittelinduziertes Aufschäumen eines Polymers. Sie kann aber auch im Rapid-Prototype-Verfahren gedruckt sein. Eine metallische Schaumstruktur kann auch durch elektrochemisches Ätzen erhalten sein. Möglich ist auch ein Formteilprozess, bei dem Kugeln oder Hohlkugeln eines geeigneten Polymers gesintert werden, die gegebenenfalls bereits metallisiert sind. Zwischen den Kugeln entstehen während des Sinterns Hohlräume ("Zwickel"), die eine Porosität bedingen. In dieser Weise wird also eine Struktur erzeugt, die aufgrund ihrer Porosität wie eine Schaumstruktur wirkt und daher hier auch als Schaumstruktur bezeichnet wird.

Eine Schichtdicke des Festkörperelektrolyten kann, ebenso wie eine Schichtdicke der Gegenelektrode, 1 bis 1000 nm, 5 bis 70 nm, 10 bis 70 nm, 30 bis 50 nm, 50 bis 100 nm, 100 bis 500 nm, 100 bis 1000 nm, 200 bis 800 nm oder 250 bis 800 nm. Bevorzugt beträgt die Schichtdicke 10 bis 50 nm, 20 bis 40 oder 25 bis 35 nm oder 300 bis 500 nm, 350 bis 450 nm oder 375 bis 425 nm. Die genannten geringen Schichtdicken für den Festkörperlelektrolyten und die Gegenelektrode sind aus den gleichen Gründen vorteilhaft, wie es die geringen Schichtdicken der elektrisch leitfähigen Schicht sind. Zusätzlich verringert eine geringe Schichtdicke des Festkörperelektrolyten den Abstand der Elektroden und notwendige Diffusionswege für die Ionen und trägt so zu einer hohen Kapazität und zu kurzen Reaktionszeiten des Kondensators bei.

Die Aufgabe der Erfindung wird gelöst durch ein Konstruktions- und/oder Isolationselement, das eine Schaumstruktur aufweist. Das Konstruktions- und/oder Isolationselement erfüllt dabei eine tragende, stützende, füllende, isolierende, geräuschdämpfende, vibrationsdämpfende oder andere konstruktive Funktion. Beispielsweise kann das Konstruktions- und/oder Isolationselement mit einem isolierenden Schaum gebildet sein und beispielsweise in einem Fahrzeug zwei Bereiche des Fahrzeugs mit unterschiedlichen Temperaturen gegeneinander isolieren. Das Konstruktions- und/oder Isolationselement kann aber auch beispielsweise mit einem festen Schaum ausgebildet sein und beispielsweise ein anderes Konstruktionselement eines Flugzeugs stützen. Das Konstruktions- und/oder Isolationselement kann auch als Dämpfungselement für Geräusche und/oder Vibrationen dienen. Das Konstruktions- und/oder Isolationselement kann auch als einzige konstruktive Funktion haben, einen Hohlraum zu füllen. Erfindungsgemäß ist die Schaumstruktur des Konstruktions- und/oder Isolationselements dabei gleichzeitig Teil eines Kondensators wie im Vorherigen beschrieben.

In dieser Weise kann vorteilhaft eine doppelte Nutzung des Konstruktions- und/oder Isolationselements erzielt werden. Das Konstruktions- und/oder Isolationselement erfüllt gleichzeitig die Funktion eines Kondensators und eine weitere konstruktive Funktion. Auf diese Weise kann zum einen Bauraum eingespart werden, indem Kondensatoren keinen eigenen Bauraum einnehmen, sondern Bauraum nutzen, der anderenfalls entweder ganz freigeblieben wäre oder lediglich beispielsweise mit einem Isoliermaterial gefüllt worden wäre. Zum anderen kann in dieser Weise aber auch Gewicht eingespart werden, wenn für den Kondensator eine Schaumstruktur genutzt wird, die anderenfalls lediglich beispielsweise isolierende oder raumfüllende Wirkung gehabt hätte. Durch diese doppelte Nutzung ist eine zusätzliche Masse des Kondensators nur durch die Schichten des Elektrolyten und der Gegenelektrode sowie eine Kontaktierung des Kondensators gegeben. Bauraum- und/oder Gewichtseinsparungen sind insbesondere bei Fahrzeugen, ganz insbesondere bei Luft- und Raumfahrzeugen, aber auch bei Landfahrzeugen, die hohe Geschwindigkeiten erreichen und/oder besonders kompakt sein sollen, vorteilhaft.

Das Konstruktions- und/oder Isolationselement kann einen Formkörper aufweisen, der die Schaumstruktur ganz oder teilweise umschließt. Dies kann insbesondere dann vorteilhaft sein, wenn das Konstruktions- und/oder Isolationselement eine tragende oder stützende Funktion übernimmt. In diesem Fall kann es sein, dass eine Schaumstruktur zu nachgiebig wäre, um die tragende oder stützende Funktion vollständig zu erfüllen. Der Formkörper stellt in diesem Fall die notwendige Stabilität bereit. Der Formkörper kann die Schaumstruktur aber auch aus anderen Gründen umschließen, beispielsweise um sie gegen Fluide abzudichten, um eine einheitliche Oberfläche bereitzustellen oder um die Schaumstruktur leichter handhabbar zu machen.

Der Formkörper kann dabei einen Faserverbundwerkstoff umfassen. Faserverbundwerkstoffe sind bei einer hohen Stabilität besonders leicht und daher besonders im Bau von Fahrzeugen, insbesondere von Luft- und Raumfahrzeugen, bevorzugte Werkstoffe. Ein Konstruktionsund/oder Isolationselement mit einem Formkörper aus einem Faserverbundwerkstoff ist daher bei Einhaltung einer geforderten Stabilität besonders leicht.

Die Aufgabe der Erfindung wird weiterhin gelöst durch ein Verfahren zur Herstellung eines erfindungsgemäßen Konstruktions- und/oder Isolationselements. Dabei wird die Schicht des Festkörperelektrolyten direkt auf die von dem Grundelement ausgebildete Elektrode aufgebracht und die elektrisch leitfähige Schicht zur Ausbildung der Gegenelektrode direkt auf den Festkörperelektrolyten aufgebracht.

Die Schaumstruktur wird direkt in dem Formkörper erzeugt, in dem ein Hohlraum in dem Formkörper mit einem Schaummaterial ausgeschäumt wird. Dabei wird unter optimiertem Materialverbrauch der Formkörper ideal mit der Schaumstruktur ausgefüllt. Dabei kann die Schaumstruktur außerhalb einer Einbausituation des Konstruktions- und/oder Isolationselement erzeugt werden. Es ist aber eine Besonderheit der Erfindung, dass ein sich bereits in einer Einbausituation befindendes Konstruktions- und/oder Isolationselement mit dem erfindungsgemäßen Verfahren zu einem erfindungsgemäßen Konstruktions- und/oder Isolationselement umgestaltet werden kann. So kann beispielsweise eine Schaumstruktur, wie sie in geläufiger Weise an Luftfahrzeugen benutzt wird, um Hohlräume aufzufüllen, mit dem erfindungsgemäßen Verfahren zu einem erfindungsgemäßen Konstruktions- und/oder Isolationselement umgestaltet werden und so einen zusätzlichen Nutzen erfahren. Mittels des erfindungsgemäßen Verfahrens können auch vorhandene Hohlräume beispielsweise in einem Fahrzeug oder einem Luft- oder Raumfahrzeug zu erfindungsgemäßen Konstruktions- und/oder Isolationselementen umgestaltet und so als Kondensatoren genutzt werden. Damit können in vorteilhafter Weise bisher ungenutzte Räume genutzt werden oder bereits genutzte konstruktive Elemente eine zusätzliche Funktion erfahren. Dies trägt nicht nur dem Leichtbauaspekt Rechnung, sondern minimiert auch den effektiven Raumverbrauch durch einen Kondensator.

Gemäß dem erfindungsgemäßen Verfahren kann der elektrisch leitfähige Teil der Poreninnenoberflächen und/oder die Gegenelektrodenoberfläche nano- oder mikrostrukturiert werden, um die oberhalb genannten Vorteile zu erzielen, also insbesondere eine Oberfläche zu vergrößern. Dazu werden beispielsweise die genannten CVD-Prozesse durchgeführt.

Dabei kann die mikro- oder nanostrukturierte elektrisch leitfähige Schicht direkt auf die Schaumstruktur aufgebracht werden, wobei die Schaumstruktur selbst elektrisch leitfähig oder nicht elektrisch leitfähig sein kann. Die mikro- oder nanostrukturierte elektrisch leitfähige Schicht kann aber auch auf eine nicht nanostrukturierte elektrisch leitfähige Schicht auf der Schaumstruktur aufgebracht werden und in dieser Weise eine vergrößerte elektrisch leitfähige Oberfläche bewirken. Die mikro- oder nanostrukturierte elektrisch leitfähige Schicht bildet dann entweder selbst die Elektrode aus oder bildet gemeinsam mit der Schaumstruktur und/oder der nicht mikro-oder nanostrukturierten elektrisch leitfähigen Schicht die Elektrode aus.

Gemäß dem erfindungsgemäßen Verfahren kann die elektrisch leitfähige Schicht zur Erzeugung der Elektrode auf einen Teil der nicht elektrisch leitfähigen Schaumstruktur aufgebracht werden. Sie kann aber auch auf die gesamte nicht elektrisch leitfähige Schaumstruktur aufgebracht werden. Beispielsweise kann die elektrisch leitfähige Schicht zur Erzeugung der Elektrode aus einem Metall oder einem elektrisch leitfähigen Polymer bestehen. Die elektrisch leitfähige Schicht kann beispielsweise mittels Plasma aus der Gasphase abgeschieden werden (beispielsweise durch PECVD, engl. plasma-enhanced chemical vapor deposition; auch plasma assisted chemical vapor deposition, PACVD). Möglich ist aber auch ein thermischer CVD-Prozess oder ein anderweitiger CVD-Prozess oder eine physikalische Gasphasenabscheidung (physical vapour deposition, PVD). Möglich ist weiterhin ein elektrochemisches Abscheiden durch galvanische Prozesse.

Mit den genannten Verfahren ist auch ein Aufbringen der elektrisch leitfähigen Schicht zur Erzeugung der Gegenelektrode möglich. Dabei kann die Gegenelektrode in der gleichen Weise erzeugt werden wie die Elektrode, sie kann aber auch in einem anderen Verfahren erzeugt werden. Insbesondere ist es möglich, dass die Elektrode bereits durch die Schaumstruktur ausgebildet wird, und die Gegenelektrode mit einem der genannten Verfahren aufgebracht wird.

Vorteilhafte Weiterbildungen der Erfindung ergeben sich aus den Patentansprüchen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung eines Kondensators mit einer elektrisch leitfähigen Schaumstruktur.
- **Fig. 2**: ist eine schematische Darstellung eines Kondensators mit einer nicht elektrisch leitfähigen Schaumstruktur.
- **Fig. 3**: illustriert ein erfindungsgemäßes Verfahren zur Herstellung eines erfindungsgemäßen Konstruktions- und/oder Isolationselement, das einen Kondensator umfasst.

### FIGURENBESCHREIBUNG

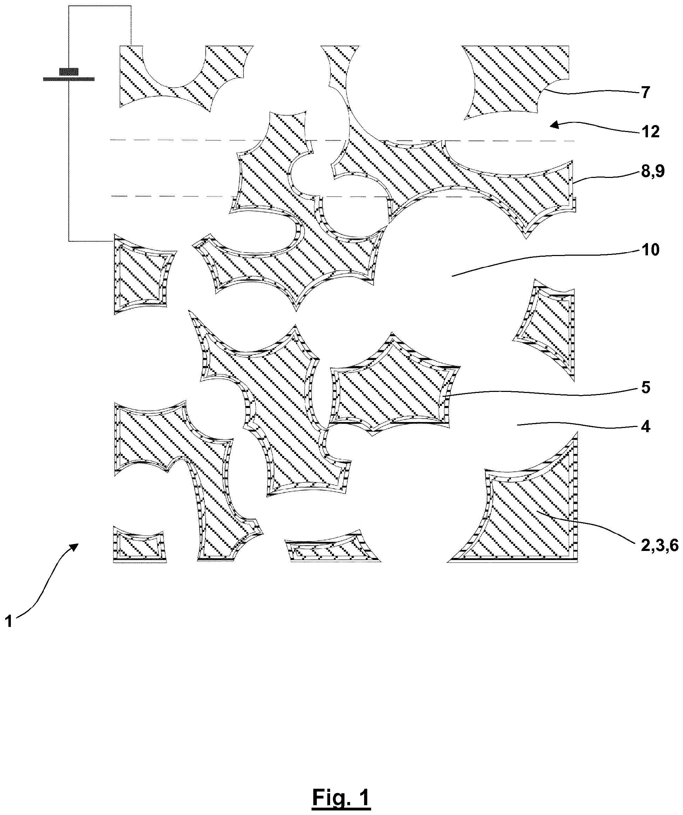

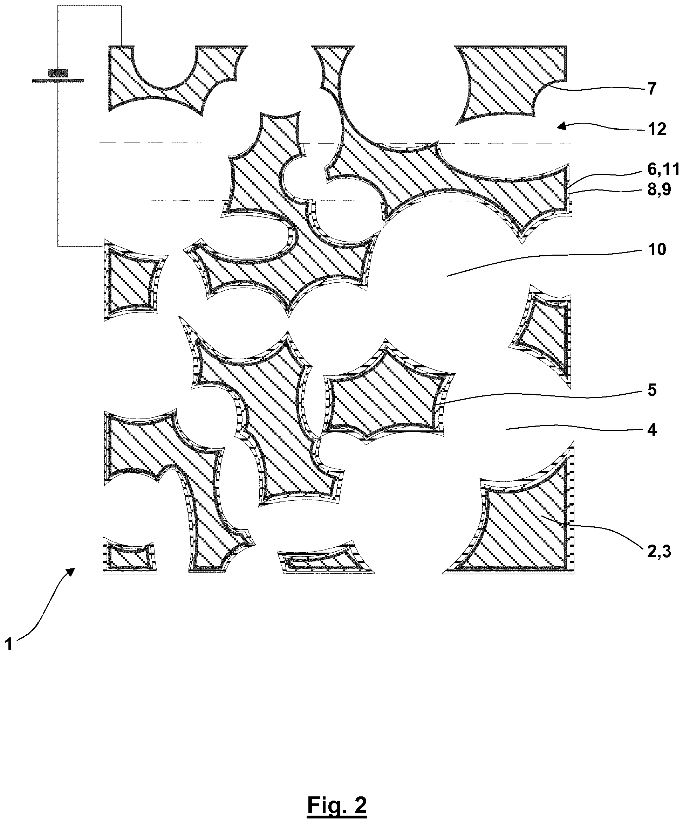

**Fig. 1** **und** **2** zeigen jeweils stark schematisch einen Kondensator 1. Dabei ist insbesondere nur ein Ausschnitt mit Dimensionen von wenigen Nanometern bis wenigen hundert Nanometern gezeigt. Dieser Ausschnitt ist stark vergrößert. Eine elektrische Kontaktierung des Kondensators 1 ist im oberen linken Bereich angedeutet.

Ein Grundelement 2 des Kondensators 1 ist aus einer Schaumstruktur 3 gebildet. Die Schaumstruktur 3 weist eine Reihe von Poren 4 auf, deren Größen im gezeigten Beispiel variieren und die unregelmäßig angeordnet sind. Die Poren 4 des Kondensators können aber durchaus eine gleichförmige Größe haben und regelmäßig angeordnet sein. In den Poren 4 ist ein Freiraum 10 gebildet. Im gezeigten Beispiel ist der Freiraum 10 nicht zwischen allen Poren 4 zusammenhängend, sondern einzelne Poren 4 sind gegen den Freiraum 10 abgeschlossen. Der Freiraum 10 kann aber auch zwischen allen oder jedenfalls den meisten Poren 4 des Grundelements 2 zusammenhängend sein. Die Poren 4 haben Poreninnenoberflächen 5, die im gezeigten Beispiel unstrukturiert sind. Die Poreninnenoberflächen 5 können aber auch mikro-oder nanostrukturiert sein.

In Fig. 1 ist ein Kondensator 1 gezeigt, dessen Grundelement 2 aus einer leitfähigen Schaumstruktur 3 gebildet ist. Die Schaumstruktur 3 bildet somit gleichzeitig eine Elektrode 6 des Kondensators aus. Auf den Poreninnenoberflächen 5 der Schaumstruktur 3 und damit direkt auf der Elektrode 6 ist eine Schicht eines Festkörperelektrolyten 7 angeordnet. Wiederum direkt auf dem Festkörperelektrolyten ist eine leitfähige Schicht 9 angeordnet. Die leitfähige Schicht 9 bildet somit eine Gegenelektrode 8 aus. Die Schaumstruktur 3 als die Elektrode 6 und die leitfähige Schicht 9 als die Gegenelektrode 8 sind einzeln elektrisch kontaktiert und voneinander elektrisch isoliert. Zur Ermöglichung der elektrischen Kontaktierung ist ein Übergangsbereich 12 gebildet, auf dessen einer (kleinerer) Seite die Schaumstruktur 3 als Elektrode 6 zur Kontaktierung freiliegt und auf dessen anderer (überwiegender) Seite die Schaumstruktur 3 von dem Festkörperelektrolyten 7 und der elektrisch leitfähigen Schicht 9 zur Ausbildung der Gegenelektrode 8 überzogen ist, sodass hier die Gegenelektrode 8 kontaktiert werden kann.

In Fig. 2 ist ein Kondensator 1 gezeigt, dessen Grundelement 2 mit einer nicht leitfähigen Schaumstruktur 3 gebildet ist. Auf den Poreninnenoberflächen 5 der Schaumstruktur 3 ist eine leitfähige Schicht 11 angeordnet, die die Elektrode 6 ausbildet. Auf der leitfähigen Schicht 11 und damit direkt auf der Elektrode 6 ist eine Schicht des Festkörperelektrolyten 7 angeordnet. Wiederum direkt auf dem Festkörperelektrolyten ist eine leitfähige Schicht 9 angeordnet. Die leitfähige Schicht 9 bildet somit die Gegenelektrode 8 aus. Die leitfähige Schicht 11 als die Elektrode 6 und die leitfähige Schicht 9 als die Gegenelektrode 8 sind einzeln elektrisch kontaktiert. Um die Kontaktierung zu ermöglichen, ist ein Übergangsbereich 12 gebildet, auf dessen einer (kleinerer) Seite die Schaumstruktur 3 nur mit der leitfähigen Schicht 11 als Elektrode 6 überzogen ist und wo somit die leitfähige Schicht 11 als Elektrode 6 zur Kontaktierung freiliegt und auf dessen anderer (überwiegender) Seite die Schaumstruktur 3 von der leitfähigen Schicht 11, dem Festkörperelektrolyten 7 und der elektrisch leitfähigen Schicht 9 zur Ausbildung der Gegenelektrode 8 überzogen ist, sodass hier die Gegenelektrode 8 kontaktiert werden kann.

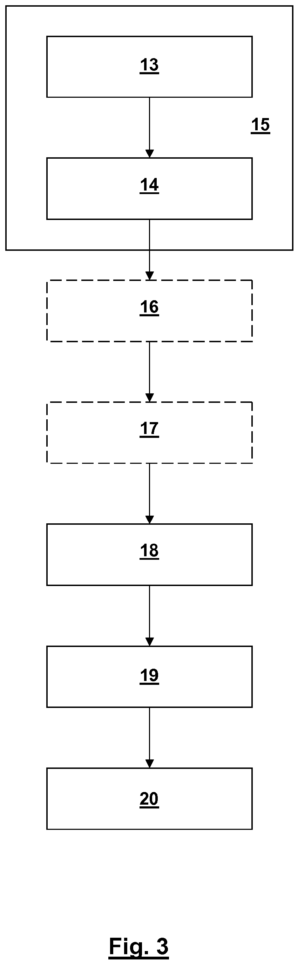

Fig. 3 illustriert ein erfindungsgemäßes Verfahren zur Herstellung eines erfindungsgemäßen Konstruktions- und/oder Isolationselements, das einen Kondensator 1 umfasst.

In einem ersten Schritt 13 wird dabei die Schaumstruktur 3 erzeugt. In einem Schritt 14 wird die Schaumstruktur in einen Formkörper eingebettet. Schritt 13 und Schritt 14 erfolgen gleichzeitig in einem Schritt 15, indem die Schaumstruktur 3 erzeugt wird, indem der Formkörper oder ein Hohlraum in dem Formkörper ausgeschäumt wird.

In einem Schritt 16 wird die leitfähige Schicht 11 auf die Schaumstruktur 3 aufgebracht und so die Elektrode 6 erzeugt. Mit der Schaumstruktur 3 und der leitfähigen Schicht 11 ist dann das Grundelement 2 gebildet. Fig. 3 ist zu entnehmen, dass Schritt 16 optional erfolgen kann. Schritt 16 kann dann entfallen, wenn die Schaumstruktur 3 bereits selbst leitfähig ist und somit die Elektrode 6 ausbilden kann. Das Grundelement 2 enthält dann normalerweise keine zusätzliche leitfähige Schicht 11.

Ebenfalls optional kann in einem Schritt 17 eine Nanostrukturierung der Oberfläche eines elektrisch leitfähigen Teils der Poreninnenoberflächen 5 (gebildet durch die Schaumstruktur 3 oder die leitfähige Schicht 11) erfolgen, beispielsweise durch CVD. Schritt 17 entfällt, wenn keine Nanostrukturierung erwünscht ist oder wenn der elektrisch leitfähige Teil der Poreninnenoberflächen 5 bereits eine Nanostrukturierung aufweist.

In einem Schritt 18 wird die Schicht des Festkörperelektrolyten auf die Elektrode 6 aufgebracht. Geeignete Verfahren ergeben sich hier aus der Art des Festkörperelektrolyten: Für organische Festkörperelektrolyte wie etwa Nafion eignen sich etwa PECVD/PACVD oder thermisches CVD. Für anorganische, kristalline oder amorphe Festkörperelektrolyte wie etwa Lithium-Phosphor-Oxinitrid (LiPON) oder andere Lithium-Verbindungen wie Li₂S-P₂S₅, Li₁₄Zn(GeO₄)₄ oder Li_{1.3}Al_{0.3}Ti_{1.7}(PO₄)₃ (NASICON) eignen sich etwa Radiofrequenz-Magnetron-Sputtern oder reaktive PVD. In einem Schritt 19 wird auf den Festkörperelektrolyten 7 eine elektrisch leitfähige Schicht 9 aufgebracht, die die Gegenelektrode 8 ausbildet.

Das Aufbringen der elektrisch leitfähigen Schichten 9, 11 in den Schritten 16 und 19 kann auf gleiche oder unterschiedliche Weise erfolgen. Beispielsweise kann die elektrisch leitfähige Schicht 9, 11 mittels Plasma aus der Gasphase abgeschieden werden, etwa durch PECVD/ PACVD oder über einen thermischen oder anderweitigen CVD-Prozess, PVD oder ein elektrochemisches Abscheiden durch galvanische Prozesse abgeschieden werden.

In einem Schritt 20 werden die Elektrode 6 und die Gegenelektrode 8 elektrisch kontaktiert, um einen Kondensator 1 ausbilden zu können. Die Elektrode 6 und die Gegenelektrode 8 können aber auch bereits in einem früheren Schritt kontaktiert werden, wenn sich dies sinnvoll in den durchzuführenden Schritt einfügt.

### BEZUGSZEICHENLISTE

- 1: Kondensator
- 2: Grundelement
- 3: Schaumstruktur
- 4: Pore
- 5: Poreninnenoberfläche
- 6: Elektrode
- 7: Festkörperelektrolyt
- 8: Gegenelektrode
- 9: leitfähige Schicht
- 10: Freiraum
- 11: leitfähige Schicht
- 12: Übergangsbereich
- 13: Schritt
- 14: Schritt
- 15: Schritt
- 16: Schritt
- 17: Schritt
- 18: Schritt
- 19: Schritt
- 20: Schritt

## Patentansprüche

1. Konstruktions- und/oder Isolationselement
- mit einer nicht elektrisch leitfähigen Schaumstruktur (3),
- mit einem Formkörper aus einem Faserverbundwerkstoff, der die Schaumstruktur (3) ganz oder teilweise umschließt, und
- mit einem Kondensator (1), der einen Schichtaufbau auf einem Grundelement (2) mit Poreninnenoberflächen aufweisenden offenen Poren (4) aufweist, wobei das Grundelement (2) die nicht elektrisch leitfähige Schaumstruktur (3) und eine elektrisch leitfähige Schicht (11) im Bereich eines Teils der Poreninnenoberflächen (5) aufweist und mit der elektrisch leitfähigen Schicht (11) eine zusammenhängende Elektrode (6) ausbildet, wobei
a) eine Schicht eines Festkörperelektrolyten (7) direkt auf der Elektrode (6) angeordnet ist,
b) eine elektrisch leitfähige Schicht (9), die eine Gegenelektrode (8) ausbildet, direkt auf dem Festkörperelektrolyten (7) angeordnet ist und
c) die Gegenelektrode als dünne Schicht aufgebracht ist, so dass innerhalb der offenen Poren (4) ein zusammenhängender Freiraum (10) verbleibt, und
d) der elektrisch leitfähige Teil der Poreninnenoberflächen (5) nanostrukturiert ist.

2. Konstruktions- und/oder Isolationselement nach Anspruch 1, **dadurch gekennzeichnet, dass** eine Schichtdicke der elektrisch leitfähigen Schicht (11) im Bereich des elektrisch leitfähigen Teils der Poreninnenoberflächen (5) 10 bis 50 nm oder 300 bis 500 nm beträgt.

3. Konstruktions- und/oder Isolationselement nach einem der vorhergehenden Ansprüche, **dadurch gekennzeichnet, dass** eine Schichtdicke des Festkörperelektrolyten (7) 10 bis 50 nm oder 300 bis 500 nm beträgt.

4. Konstruktions- und/oder Isolationselement nach einem der vorhergehenden Ansprüche, **dadurch gekennzeichnet, dass** eine Schichtdicke der Gegenelektrode (8) 10 bis 50 nm oder 300 bis 500 nm beträgt.

5. Konstruktions- und/oder Isolationselement
- mit einer elektrisch leitfähigen Schaumstruktur (3),
- mit einem Formkörper aus einem Faserverbundwerkstoff, der die Schaumstruktur (3) ganz oder teilweise umschließt, und
- mit einem Kondensator (1), der einen Schichtaufbau auf einem Grundelement (2) mit Poreninnenoberflächen aufweisenden offenen Poren (4) aufweist, wobei das Grundelement (2) die elektrisch leitfähige Schaumstruktur (3) aufweist und damit im Bereich der Poreninnenoberflächen (5) leitfähig ist und eine zusammenhängende Elektrode (6) ausbildet, wobei
a) eine Schicht eines Festkörperelektrolyten (7) direkt auf der Elektrode (6) angeordnet ist,
b) eine elektrisch leitfähige Schicht (9), die eine Gegenelektrode (8) ausbildet, direkt auf dem Festkörperelektrolyten (7) angeordnet ist und
c) die Gegenelektrode als dünne Schicht aufgebracht ist, so dass innerhalb der offenen Poren (4) ein zusammenhängender Freiraum (10) verbleibt, und
d) der elektrisch leitfähige Teil der Poreninnenoberflächen (5) nanostrukturiert ist.

6. Konstruktions- und/oder Isolationselement nach Anspruch 5, **dadurch gekennzeichnet, dass** eine Schichtdicke des Festkörperelektrolyten (7) 10 bis 50 nm oder 300 bis 500 nm beträgt.

7. Konstruktions- und/oder Isolationselement nach Anspruch 5 oder 6, **dadurch gekennzeichnet, dass** eine Schichtdicke der Gegenelektrode (8) 10 bis 50 nm oder 300 bis 500 nm beträgt.

8. Verfahren zur Herstellung eines Konstruktions- und/oder Isolationselements nach einem der Ansprüche 1 bis 4, wobei
a) die elektrisch nicht leitfähige Schaumstruktur (3) erzeugt wird, indem ein Hohlraum in dem Formkörper mit einem Schaummaterial ausgeschäumt wird,
b) die elektrisch leitfähige Schicht (11) zur Erzeugung der zusammenhängenden Elektrode (6) auf einen Teil der nicht elektrisch leitfähigen Schaumstruktur (3) aufgebracht wird,
c) die zusammenhängende Elektrode (6) nanostrukturiert wird,
d) die Schicht des Festkörperelektrolyten (7) direkt auf die zusammenhängende Elektrode (6) aufgebracht wird und
e) die elektrisch leitfähige Schicht (9) zur Ausbildung der Gegenelektrode (8) direkt auf den Festkörperelektrolyten (7) aufgebracht wird.

9. Verfahren nach Anspruch 8, **dadurch gekennzeichnet, dass** eine nanostrukturierte elektrisch leitfähige Schicht auf die Schaumstruktur (3) oder auf eine nicht nanostrukturierte elektrisch leitfähige Schicht auf der Schaumstruktur (3) aufgebracht wird.

10. Verfahren nach Anspruch 8 oder 9, **dadurch gekennzeichnet, dass** das Aufbringen der elektrisch leitfähigen Schicht (11) zur Erzeugung der Elektrode (6) durch Abscheiden aus der Gasphase mittels Plasma oder elektrochemisch durch galvanische Prozesse erfolgt.

11. Verfahren nach einem der Ansprüche 8 bis 10, **dadurch gekennzeichnet, dass** das Aufbringen der elektrisch leitfähigen Schicht (9) zur Erzeugung der Gegenelektrode (8) durch Abscheiden aus der Gasphase mittels Plasma oder elektrochemisch durch galvanische Prozesse erfolgt.

12. Verfahren zur Herstellung eines Konstruktions- und/oder Isolationselements nach einem der Ansprüche 5 bis 7, wobei
a) die elektrisch leitfähige Schaumstruktur (3) erzeugt wird, indem ein Hohlraum in dem Formkörper mit einem Schaummaterial ausgeschäumt wird,
b) dass die im Bereich der Poreninnenoberflächen (5) von der leitfähigen Schaumstruktur (3) ausgebildete zusammenhängende Elektrode (6) nanostrukturiert wird,
c) die Schicht des Festkörperelektrolyten (7) direkt auf die zusammenhängende Elektrode (6) aufgebracht wird und
d) die elektrisch leitfähige Schicht (9) zur Ausbildung der Gegenelektrode (8) direkt auf den Festkörperelektrolyten (7) aufgebracht wird.

13. Verfahren nach Anspruch 12, **dadurch gekennzeichnet, dass** eine nanostrukturierte elektrisch leitfähige Schicht auf die Schaumstruktur (3) oder auf eine nicht nanostrukturierte elektrisch leitfähige Schicht auf der Schaumstruktur (3) aufgebracht wird.

14. Verfahren nach einem der Ansprüche 12 und 13, **dadurch gekennzeichnet, dass** das Aufbringen der elektrisch leitfähigen Schicht (9) zur Erzeugung der Gegenelektrode (8) durch Abscheiden aus der Gasphase mittels Plasma oder elektrochemisch durch galvanische Prozesse erfolgt.

## Claims

1. Construction and/or insulating element comprising
- an electrically non-conductive foam structure (3),
- a shaped body of a fibre composite material, which completely or partially encloses the foam structure (3), and
- a capacitor (1), which has a layered construction on a base element (2) with open pores (4) having inner pore surfaces, wherein the base element (2) comprises the electrically non-conductive foam structure (3) and an electrically conductive layer (11) in a region of a part of the inner pore surfaces (5) and, by means of the electrically conductive layer (11), forms a continuous electrode (6), wherein
a) a layer of a solid body electrolyte (7) is arranged directly on the electrode (6),
b) an electrically conductive layer (9) which forms a counter electrode (8) is arranged directly on the solid body electrolyte (7) and
c) the counter electrode is applied as a thin layer so that, within the open pores (4), a continuous free space (10) remains, and
d) the electrically conductive part of the inner pore surfaces (5) is nanostructured.

2. Construction and/or insulating element of claim 1, **characterized in that** a layer thickness of the electrically conductive layer (11) in the region of the electrically conductive part of the inner pore surfaces (5) is 10 to 50 nm or 300 to 500 nm.

3. Construction and/or insulating element of any of the preceding claims, **characterized in that** a layer thickness of the solid body electrolyte (7) is 10 to 50 nm or 300 to 500 nm.

4. Construction and/or insulating element of any of the preceding claims, **characterized in that** a thickness of the counter electrode (8) is 10 to 50 nm or 300 to 500 nm.

5. Construction and/or insulating element comprising
- an electrically conductive foam structure (3),
- a shaped body of a fibre composite material, which completely or partially encloses the foam structure (3),
- a capacitor (1), which has a layered construction on a base element (2) with open pores (4) having inner pore surfaces, wherein the base element (2) comprises the electrically conductive foam structure (3), and, thus, in a region of the inner pore surfaces (5) is electrically conductive and forms a continuous electrode (6), wherein
a) a layer of a solid body electrolyte (7) is arranged directly on the electrode (6),
b) an electrically conductive layer (9) which forms a counter electrode (8) is arranged directly on the solid body electrolyte (7) and
c) the counter electrode is applied as a thin layer so that, within the open pores (4), a continuous free space (10) remains, and
d) the electrically conductive part of the inner pore surfaces (5) is nanostructured.

6. Construction and/or insulating element of claim 5, **characterized in that** a thickness of the solid body electrolyte (7) is 10 to 50 nm or 300 to 500 nm.

7. Construction and/or insulating element of claim 5 or 6, **characterized in that** a thickness of the counter electrode (8) is 10 to 50 nm or 300 to 500 nm.

8. Method of manufacturing a construction and/or insulating element of any of the claims 1 to 4, wherein
a) the electrically non-conductive foam structure (3) is created by foam-filling an empty space in the moulded body with a foam material,
b) the electrically conductive layer (11) is applied to a part of the electrically non-conductive foam structure (3) in order to form the continuous electrode (6),
c) the continuous electrode (6) is nanostructured,
d) the layer of the solid body electrolyte (7) is directly applied to the continuous electrode (6) and
e) the electrically conductive layer (9) for forming the counter electrode (8) is directly applied to the solid body electrolyte (7).

9. The method of claim 8, **characterized in that** a nanostructured electrically conductive layer is applied to the foam structure (3) or to a non-nanostructured electrically conductive layer on the foam structure (3).

10. The method of claim 8 or 9, **characterized in that** the application of the electrically conductive layer (11) in order to form the electrode (6) is achieved by gas phase deposition by means of plasma or electrochemically by means of galvanic processes.

11. The method of any of the claims 8 to 10, **characterized in that** the application of the electrically conductive layer (9) in order to form the counter electrode (8) is achieved by gas phase deposition by means of plasma or electrochemically by means of galvanic processes.

12. Method of manufacturing a construction and/or insulating element of any of the claims 5 to 7, wherein
a) the electrically conductive foam structure (3) is created by foam-filling an empty space in the moulded body with a foam material,
b) the continuous electrode (6) formed in the region of the inner pore surfaces (5) by the electrically non-conductive foam structure (3) is nanostructured,
c) the layer of the solid body electrolyte (7) is directly applied to the continuous electrode (6) and
d) the electrically conductive layer (9) for forming the counter electrode (8) is directly applied to the solid body electrolyte (7).

13. The method of claim 12, **characterized in that** a nanostructured electrically conductive layer is applied to the foam structure (3) or to a non-nanostructured electrically conductive layer on the foam structure (3).

14. The method of claim 12 or 13, **characterized in that** the application of the electrically conductive layer (9) in order to form the counter electrode (8) is achieved by gas phase deposition by means of plasma or electrochemically by means of galvanic processes.

## Revendications

1. Élément de construction et/ou d'isolation
- avec une structure alvéolaire non électro-conductrice (3),
- avec un corps moulé constitué d'un matériau composite à fibres, qui entoure la structure alvéolaire (3) entièrement ou partiellement et
- avec un condensateur (1), qui présente une structure en couches sur un élément de base (2) avec des pores ouverts (4) présentant des surfaces internes de pores, dans lequel l'élément de base (2) comprend la structure alvéolaire non électro-conductrice (3) et une couche électro-conductrice (11) au niveau d'une partie des surfaces internes de pores (5) et forme, avec la couche électro-conductrice (11) une électrode d'une seule pièce (6), dans lequel
a) une couche d'un électrolyte à l'état solide (7) est disposée directement sur l'électrode (6),
b) une couche électro-conductrice (9), qui forme une contre-électrode (8), est disposée directement sur l'électrolyte à l'état solide (7) et
c) la contre-électrode est réalisée sous la forme d'une couche mince, de sorte que, à l'intérieur des pores ouverts (4), il reste un espace libre d'un seul tenant (10) et
d) la partie électro-conductrice des surfaces internes des pores (5) présente une nanostructure.

2. Élément de construction et/ou d'isolation selon la revendication 1, **caractérisé en ce qu'**une épaisseur de couche de la couche électro-conductrice (11) est, au niveau de la partie électro-conductrice des surfaces internes des pores (5), de 10 à 50 nm ou de 300 à 500 nm.

3. Élément de construction et/ou d'isolation selon l'une des revendications précédentes, **caractérisé en ce qu'**une épaisseur de couche de l'électrolyte à l'état solide (7) est de 10 à 50 nm ou de 300 à 500 nm.

4. Élément de construction et/ou d'isolation selon l'une des revendications précédentes, **caractérisé en ce qu'**une épaisseur de couche de la contre-électrode (8) est de 10 à 50 nm ou de 300 à 500 nm.

5. Élément de construction et/ou d'isolation
- avec une structure alvéolaire électro-conductrice (3),
- avec un corps moulé constitué d'un matériau composite à fibres, qui entoure la structure alvéolaire (3) entièrement ou partiellement et
- avec un condensateur (1), qui présente une structure en couches sur un élément de base (2) avec des pores ouverts (4) présentant des surfaces internes de pores, dans lequel l'élément de base (2) comprend la structure alvéolaire électro-conductrice (3) et est donc conducteur au niveau des surfaces internes de pores (5) et forme une électrode d'une seule pièce (6), dans lequel
a) une couche d'un électrolyte à l'état solide (7) est disposée directement sur l'électrode (6),
b) une couche électro-conductrice (9), qui forme une contre-électrode (8), est disposée directement sur l'électrolyte à l'état solide (7) et
c) la contre-électrode est réalisée sous la forme d'une couche mince, de sorte que, à l'intérieur des pores ouverts (4), il reste un espace libre d'un seul tenant (10) et
d) la partie électro-conductrice des surfaces internes des pores (5) présente une nanostructure.

6. Élément de construction et/ou d'isolation selon la revendication 5, **caractérisé en ce qu'**une épaisseur de couche de l'électrolyte à l'état solide (7) est de 10 à 50 nm ou de 300 à 500 nm.

7. Élément de construction et/ou d'isolation selon la revendication 5 ou 6, **caractérisé en ce qu'**une épaisseur de couche de la contre-électrode (8) est de 10 à 50 nm ou de 300 à 500 nm.

8. Procédé de fabrication d'un élément de construction et/ou d'isolation selon l'une des revendications 1 à 4, dans lequel
a) la structure alvéolaire non électro-conductrice (3) est réalisée grâce au fait qu'une cavité du corps moulé est remplie d'un matériau alvéolaire,
b) la couche électro-conductrice (11) pour la réalisation de l'électrode d'une seule pièce (6) est déposée sur une partie de la structure alvéolaire non électro-conductrice (3),
c) l'électrode d'une seule pièce (6) présente une nanostructure,
d) la couche de l'électrolyte à l'état solide (7) est déposée directement sur l'électrode d'une seule pièce (6) et
e) la couche électro-conductrice (9) pour la formation de la contre-électrode (8) est déposée directement sur l'électrolyte à l'état solide (7).

9. Procédé selon la revendication 8, **caractérisé en ce qu'**une couche électro-conductrice nanostructurée est déposée sur la structure alvéolaire (3) ou sur une couche électro-conductrice non nanostructurée sur la structure alvéolaire (3).

10. Procédé selon la revendication 8 ou 9, **caractérisé en ce que** le dépôt de la couche électro-conductrice (11) pour la réalisation de l'électrode (6) a lieu grâce à une déposition à partir de la phase gazeuse au moyen d'un plasma ou de manière électrochimique par des processus galvaniques.

11. Procédé selon l'une des revendications 8 à 10, **caractérisé en ce que** le dépôt de la couche électro-conductrice (9) pour la réalisation de la contre-électrode (8) a lieu par déposition à partir de la phase gazeuse au moyen d'un plasma ou de manière électrochimique par des processus galvaniques.

12. Élément de construction et/ou d'isolation selon l'une des revendications 5 à 7, dans lequel
a) la structure alvéolaire électro-conductrice (3) est réalisée grâce au fait qu'une cavité du corps moulé est remplie d'un matériau alvéolaire,
b) l'électrode d'une seule pièce (6) réalisée au niveau des surfaces internes de pores (5) par la structure alvéolaire conductrice (3) présente une nanostructure,
c) la couche de l'électrolyte à l'état solide (7) est appliquée directement sur l'électrode d'une seule pièce (6) et
d) la couche conductrice (9) pour la formation de la contre-électrode (8) est appliquée directement sur l'électrolyte à l'état solide (7).

13. Procédé selon la revendication 12, **caractérisé en ce qu'**une couche électro-conductrice nanostructurée est appliquée sur la structure alvéolaire (3) ou sur une couche électro-conductrice non nanostructurée sur la structure alvéolaire (3).

14. Procédé selon l'une des revendications 12 et 13, **caractérisé en ce que** l'application de la couche électro-conductrice (9) pour la réalisation de la contre-électrode (8) a lieu par déposition à partir de la phase gazeuse au moyen d'un plasma ou de manière électrochimique par des processus galvaniques.
